# EUROPÄISCHE PATENTSCHRIFT

(11) **EP 3 230 104 B1**
(45) Veröffentlichungstag und Bekanntmachung des Hinweises auf die Patenterteilung: **05.05.2021**
(21) Anmeldenummer: 15794892.8
(22) Anmeldetag: 12.11.2015
(51) Int. Cl.: B60K 6/365, B60K 6/48, B60K 6/547, F16H 3/72, F16H 3/66

(54) **MEHRSTUFENGETRIEBE IN PLANETENBAUWEISE**
PLANETARY MULTI-STAGE TRANSMISSION
BOÎTE DE VITESSES MULTIÉTAGÉE À TRAINS ÉPICYCLOÏDAUX

(30) Priorität: 12.12.2014 DE 102014225736
(43) Veröffentlichungstag der Anmeldung: 18.10.2017
(73) Patentinhaber: ZF Friedrichshafen AG, 88046 Friedrichshafen (DE)
(72) Erfinder: BECK, Stefan, 88097 Eriskirch (DE); KALTENBACH, Johannes, 88048 Friedrichshafen (DE); GRIESMEIER, Uwe, 88677 Markdorf (DE); HORN, Matthias, 88069 Tettnang (DE); WARTH, Viktor, 88048 Friedrichshafen (DE); WECHS, Michael, 88138 Weißensberg (DE); MORAW, Jens, 88045 Friedrichshafen (DE); KNÖPKE, Bernd, 88682 Salem (DE)
(74) Vertreter: ZF Friedrichshafen AG
(86) Internationale Anmeldenummer: PCT/EP2015/076373
(87) Internationale Veröffentlichungsnummer: WO 2016/091525

(56) Entgegenhaltungen:
- DE-A1-102009 046 367
- DE-A1-102012 219 125
- US-A1- 2007 197 335
- US-A1- 2007 225 097

## Beschreibung

Die vorliegende Erfindung betrifft ein Mehrstufengetriebe in Planetenbauweise für ein Fahrzeug mit zumindest einer elektrischen Maschine und mit mehreren Planetenradsätzen gemäß der im Oberbegriff des Patentanspruches 1 näher definierten Art.

Aus der Fahrzeugtechnik sind derartigen Hybridgetriebe bekannt, mit denen ein rein elektrisches Anfahren und rein elektrisches Fahren sowie ein Verbrennungsmotorstart aus rein elektrischer Fahrt heraus, ein so genannter Schleppstart, möglich sind. Ferner ist ein hybridisches Fahren mit Lastpunktverschiebung denkbar. Zudem ist bekannt, dass die elektrische Maschine über eine zusätzliche Vorübersetzung an die Getriebeeingangswelle angebunden ist. Dadurch kann die elektrische Maschine mit weniger Drehmoment ausgelegt werden.

Beispielsweise aus der Druckschrift DE10 2009 046 367 A1 ist ein derartiges Hybrid-Mehrstufengetriebe in Planetenbauweise mit einer zusätzlichen Vorübersetzung für die elektrische Maschine bekannt. Es hat sich jedoch gezeigt, dass durch die Anbindung der elektrischen Maschine über eine zusätzliche Vorübersetzung erheblicher Bauraum erforderlich ist, wodurch nicht nur die Herstellungskosten, sondern auch der Verbrauch erhöht werden.

Aus der Druckschrift US 2007/0197335 A1 ist ein elektrisch variables Getriebe mit drei Planetenradsätzen, einem drehfesten Element und drei ständigen Verbindungen bekannt.

Der vorliegenden Erfindung liegt die Aufgabe zu Grunde, ein Mehrstufengetriebe der eingangs beschriebenen Art vorzuschlagen, bei dem zumindest die vorgenannten Funktionen realisierbar sind und welches zudem konstruktiv einfach und kostengünstig aufgebaut ist.

Diese Aufgabe wird erfindungsgemäß durch die Merkmale des Patentanspruches 1 gelöst, wobei sich vorteilhafte Weiterbildungen aus den Unteransprüchen, der Beschreibung und den Zeichnungen ergeben.

Somit wird ein Mehrstufengetriebe in Planetenbauweise für ein Fahrzeug mit zumindest einer elektrischen Maschine und mit mehreren Planetenradsätzen in einem Gehäuse vorgeschlagen, wobei ein Antrieb, beispielsweise ein Verbrennungsmotor, mit einer ersten Welle und der Abtrieb des Getriebes mit einer zweiten Welle verbindbar sind. Ferner sind weitere Wellen und mehrere Schaltelemente vorgesehen, durch deren Betätigung mehrere Vorwärtsgänge realisierbar sind.

Zum Realisieren einer getriebeintegrierten Vorübersetzung der elektrischen Maschine ist vorgesehen, dass das erste Element des ersten Planetenradsatzes mit dem Gehäuse verbunden ist und dass die erste Welle fest mit dem zweiten Element des ersten Planetenradsatzes verbunden ist. Ferner ist der Rotor der elektrischen Maschine mit dem dritten Element des ersten Planetenradsatzes verbunden. Zudem ist das dritte Element des ersten Planetenradsatzes über zumindest ein Schaltelement mit zumindest einem Element zumindest eines weiteren Planetenradsatzes verbindbar.

Auf diese Weise ist die elektrische Maschine einerseits zur Getriebeeingangswelle, also zum Antrieb über eine feste gangunabhängige Übersetzung verbunden, wodurch die elektrische Maschine in jedem Gang schneller als der Verbrennungsmotor an die Getriebeeingangswelle angebunden ist. Somit kann die elektrische Maschine mit weniger Drehmoment, aber mit höherer Drehzahl ausgelegt werden, welches sich besonders günstig auf die Herstellungskosten auswirkt. Andererseits ergibt sich der Vorteil, dass die feste Vorübersetzung für die elektrische Maschine über einen getriebeintegrierten Radsatz erzeugt wird, welcher auch bei der Entstehung weiterer Gangstufen mitwirkt. Somit wird der die Vorübersetzung bildende Radsatz mehrfach genutzt und somit kann Bauraum für einen sonst erforderlichen zusätzlichen Radsatz als Vorübersetzung eingespart werden.

Beispielsweise kann bei der Verbindung zwischen dem Rotor der elektrischen Maschine und dem dritten Element des ersten Planetenradsatzes eine direkte Verbindung z.B. bei einer koaxialen Anordnung von elektrischer Maschine und dritten Element des ersten Planetenradsatzes vorgesehen sein, um Bauraum und Bauteile einzusparen. Es ist jedoch auch denkbar, dass eine indirekte Anbindung beispielsweise über Wellen und/oder andere Bauteile, wie zum Beispiel Übersetzungsstufen, Ketten- oder Riementriebe oder dergleichen, vorgesehen ist, um beispielsweise eine nicht koaxiale Anordnung von elektrischer Maschine und drittem Element des ersten Radsatzes zu ermöglichen. Dies gilt auch für andere Verbindungen bei dem erfindungsgemäßen Mehrstufengetriebe.

Ein weiterer Vorteil ergibt sich bei dem vorgeschlagenen Mehrstufengetriebe dadurch, dass kein mechanischer Rückwärtsgang in der Getriebestruktur erforderlich ist, da das Rückwärtsfahren mit der dann rückwärts drehenden elektrischen Maschine in einem Vorwärtsgang möglich ist. Ferner ist es vorteilhaft, dass die elektrische Maschine die erste Gangübersetzung des Getriebes nutzen kann und zusätzlich noch über die integrierte Vorübersetzung angebunden ist, wodurch sich ein hohes Anfahrmoment sowohl für die Rückwärtsfahrt als auch für die Vorwärtsfahrt ergibt.

Das vorgeschlagene Mehrstufengetriebe umfasst somit im Wesentlichen drei Planetenradsatz-Radebenen, wenn die Planetenradsätze axial hintereinander angeordnet sind. Ferner sind nur sechs Schaltelemente einschließlich des den Antrieb mit dem Getriebeeingang verbindenden Schaltelementes erforderlich, wobei bei jeder Gangübersetzung gleichzeitig zwei zuschaltende Schaltelemente vorgesehen sind. An den nur sechs erforderlichen Wellen kann prinzipiell an jeder Welle ein Freilauf zum Gehäuse oder zu einer anderen Welle angeordnet werden.

Gemäß einer bauraumsparenden Variante der vorliegenden Erfindung kann auch vorgesehen sein, dass beispielsweise zwei der Planetenradsätze radial hintereinander angeordnet werden, so dass die miteinander verschachtelten Radsätze im Wesentlichen eine gemeinsame Radebene bilden. Auf diese Weise wird quasi eine Radebene und damit axialer Bauraum eingespart.

Vorzugseise kann das Mehrstufengetriebe eine Bremse als Schaltelement und fünf als Kupplungen ausgeführte Schaltelemente umfassen, wobei vorzugsweise eine gehäusefeste Koppelung eines Elementes eines der Planetenradsätze als zusätzliche Gehäuseabstützung vorgesehen ist.

Unter dem Begriff Schaltelement ist eine schaltbare Verbindung zwischen zwei Elementen des Getriebes zu verstehen, wobei das zwischen diesen beiden Elementen zu übertragene Drehmoment mittels Kraftschluss bzw. Reibschluss oder mittels Formschluss übertragen wird. Sind beide Elemente der schaltbaren Verbindung rotierbar ausgeführt, so wird das Schaltelement als Kupplung bezeichnet und wenn nur eines der beiden Elemente der schaltbaren Verbindung rotiert, wird das Schaltelement als Bremse bezeichnet.

Darüber hinaus ist auch die geometrische Lage bzw. Reihenfolge der einzelnen Schaltelemente frei wählbar, so lange es die Bindbarkeit der Elemente zulässt. Auf diese Weise können einzelne Elemente beliebig in ihrer Lage verschoben werden.

Ausführungsbeispiele eines kraftschlüssigen Schaltelements sind Lamellenkupplungen oder -bremsen, Bandbremsen, Konuskupplungen oder -bremsen, elektromagnetische Kupplungen, Magnetpulverkupplungen und elektro-rheologische Kupplung. Ausführungsbeispiele für ein formschlüssiges Schaltelement sind Klauenkupplungen oder -bremsen und Zahnkupplungen.

Als Schaltelemente können somit generell sowohl reib- als auch formschlüssige Schaltelemente eingesetzt werden. Vorzugsweise kann aufgrund seiner Charakteristik als Verbindung zwischen Antrieb und Getriebe vor allem das als Kupplung ausgeführte erste Schaltelement als trockene oder nasse Lamellenkupplung ausgeführt werden, um einen Schleppstart zu ermöglichen. Das als Bremse ausgeführte sechste Schaltelement kann bevorzugt als formschlüssiges Schaltelement, z. B. als Klaue, Synchronisierung oder dergleichen ausgeführt sein.

Die Planetenradsätze können in axialer Richtung betrachtet in der Reihenfolge erster Planetenradsatz, zweiter Planetenradsatz und dritter Planetenradsatz angeordnet sein, wobei vorzugsweise sämtliche Radsätze als Minus-Planetenradsätze vorgesehen sind. Es ist jedoch möglich an Stellen, wo es die Bindbarkeit zulässt, einzelne oder mehrere der Minus-Planetenradsätze in Plus-Planetenradsätze umzuwandeln, wenn gleichzeitig die Steg- und die Hohlradanbindung getauscht und der Betrag der Standardübersetzung um den Wert 1 erhöht wird. Ein Minus-Planetenradsatz weist bekanntlich an dem Planetenradträger verdrehbar gelagerte Planetenräder auf, die mit dem Sonnenrad und dem Hohlrad dieses Planetenradsatzes kämmen, so dass sich das Hohlrad bei festgehaltenem Planetenradträger und drehendem Sonnenrad in zur Sonnenraddrehrichtung entgegengesetzter Richtung dreht. Ein Plus-Planetenradsatz weist bekanntlich an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, so dass sich das Hohlrad bei festgehaltenem Planetenradträger und drehendem Sonnenrad in zur Sonnenraddrehrichtung gleicher Richtung dreht.

Die geometrische Lage bzw. Reihenfolge der einzelnen Planetenradsätze und Schaltelemente ist frei wählbar, soweit es die Bindbarkeit der Elemente zulässt. So können beispielsweise einzelne Elemente beliebig in ihrer Lage verschoben werden.

Das vorgeschlagene Mehrstufengetriebe kann sowohl in koaxialer Bauweise ausgeführt werden, bei der der Antrieb und der Abtrieb koaxial zueinander angeordnet sind. Es ist jedoch auch denkbar, dass ein seitlicher Abtrieb für eine Front-Quer- oder eine Heck-Queranordnung im Fahrzeug vorgesehen wird.

Nachfolgend wird die vorliegende Erfindung anhand der Zeichnungen weiter erläutert. Es zeigen:
Fig. 1 eine schematische Ansicht einer ersten Ausführungsvariante eines erfindungsgemäßen Mehrstufengetriebes in Planetenbauweise mit koaxialem Antrieb und Abtrieb;
Fig. 2 eine schematische Ansicht einer alternativen Ausgestaltung der ersten Ausführungsvariante;
Fig. 3 eine schematische Ansicht einer zweiten Ausführungsvariante des Mehrstufengetriebes mit seitlichem Abtrieb;
Fig. 4 eine schematische Ansicht der ersten Ausführungsvariante mit einem als Plus-Planetenradsatz ausgeführten ersten Planetenradsatz;
Fig. 5 eine schematische Ansicht der ersten Ausführungsvariante mit einem als Plus-Planetenradsatz ausgeführten zweiten Planetenradsatzes;
Fig. 6 eine schematische Ansicht der ersten Ausführungsvariante mit einem als Plus-Planetenradsatz ausgeführten dritten Planetenradsatzes;
Fig. 7 eine schematische Ansicht der ersten Ausführungsvariante mit verschachteltem zweiten und dritten Planetenradsatz;
Fig. 8 eine schematische Ansicht der zweiten Ausführungsvariante mit verschachteltem zweiten und dritten Planetenradsatz;
Fig. 9 eine weitere schematische Ansicht der zweiten Ausführungsvariante mit verschachteltem zweiten und dritten Planetenradsatz; und
Fig. 10 ein beispielhaft angegebenes Schaltschema für sämtliche Ausführungsbeispiele und Ausgestaltungen gemäß Fig. 1 bis 9.

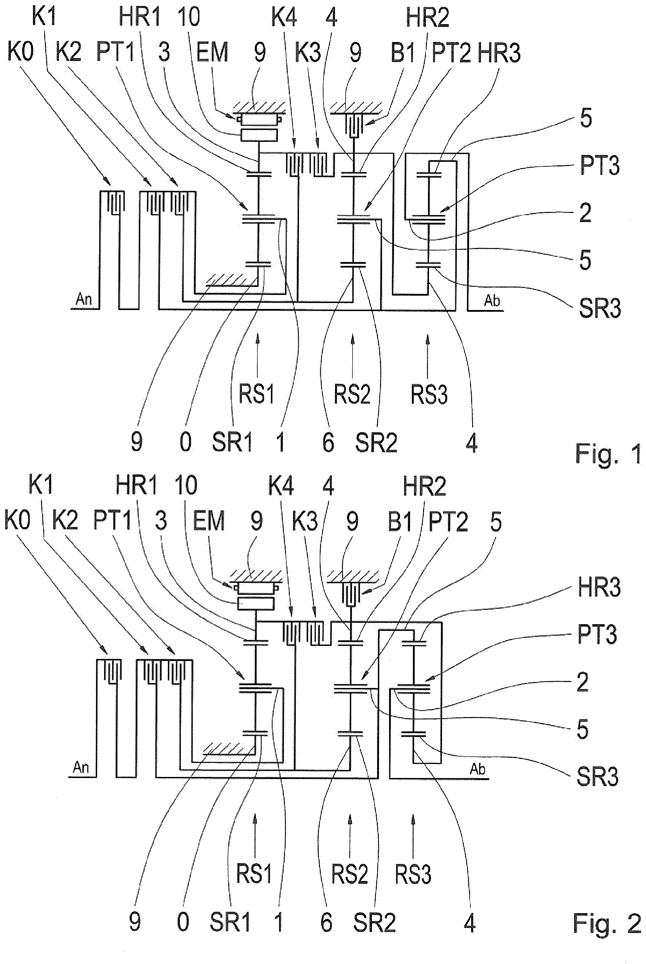

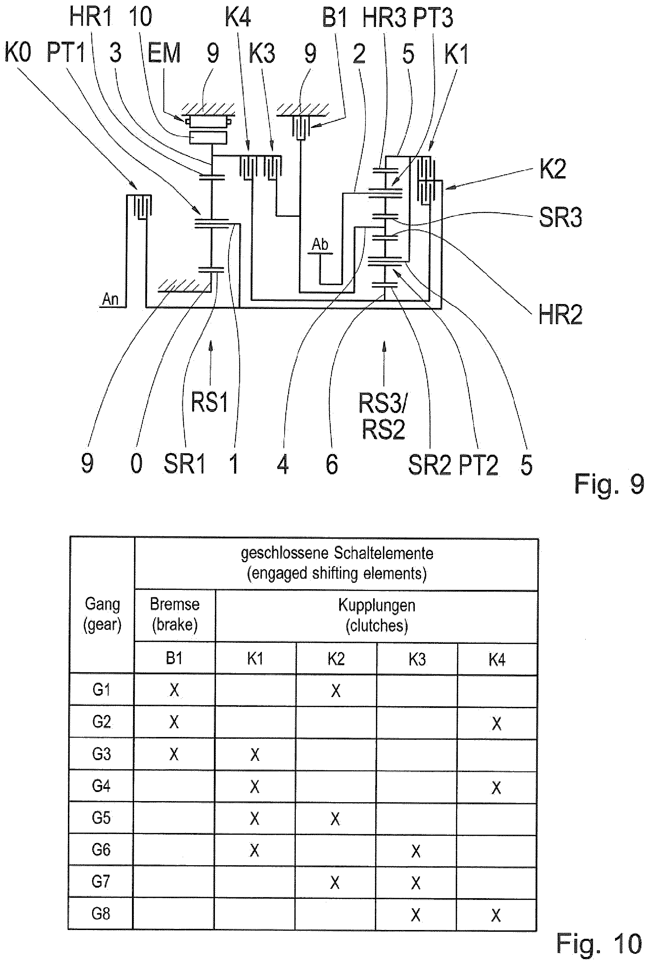

Figuren 1 bis 9 zeigen verschiedene Ausführungen des erfindungsgemäßen Mehrstufengetriebes in Planetenbauweise, zum Beispiel als automatisches Achtganggetriebe bzw. Automatgetriebe für ein Fahrzeug, insbesondere ein Kraftfahrzeug, wobei in Figur 10 beispielhaft ein Schaltschema zum Realisieren der verschiedenen Gangstufen exemplarisch dargestellt ist.

Unabhängig von den jeweiligen Ausführungen ist das Mehrstufengetriebe lediglich schematisch als Radsatz mit einem Gehäuse 9 dargestellt. Ebenfalls schematisch ist der Antrieb An zum Beispiel als Verbrennungsmotor und der Abtrieb Ab angedeutet. Das vorgeschlagene Mehrstufengetriebe umfasst eine erste, zweite, dritte, vierte, fünfte und sechste Welle 1, 2, 3, 4, 5, 6 sowie eine feste Gehäusekopplung 0. Ferner ist zumindest eine elektrische Maschine EM sowie ein erster Planetenradsatz RS1, ein zweiter Planetenradsatz RS2 und ein dritter Planetenradsatz RS3 vorgesehen, wobei ein zum Beispiel als Verbrennungsmotor vorgesehener Antrieb An über ein als Kupplung ausgeführtes erstes Schaltelement K0 mit einer ersten Welle 1 verbindbar ist und ein Abtrieb Ab mit einer zweiten Welle 2 verbunden ist.

Zum Schalten der zumindest acht vorgesehenen Vorwärtsgänge G1, G2, G3, G4, G5, G6, G7, G8 sind ein zweites als Kupplung ausgeführtes Schaltelement K1, ein drittes als Kupplung ausgeführtes Schaltelement K2, ein viertes als Kupplung ausgeführtes Schaltelement K3, ein fünftes als Kupplung ausgeführtes Schaltelement K4 und ein als Bremse ausgeführtes sechstes Schaltelement B1 vorgesehen. Die zumindest eine Rückwärtsgangübersetzung R wird elektrisch durch die rückwärtsdrehende elektrische Maschine EM mit Hilfe eines Vorwärtsganges realisiert. Auf diese Weise kann eine Radstufe zur Drehrichtungsumkehr eingespart werden.

Unabhängig von den verschiedenen Ausführungsvarianten ist zum Realisieren einer Vorübersetzung der elektrischen Maschine EM vorgesehen, dass ein erstes Element des ersten Planetenradsatzes RS1 fest mit dem Gehäuse 9 über die feste Gehäusekopplung 0 verbunden ist. Ferner ist dazu die mit dem Antrieb An bzw. mit dem Verbrennungsmotor verbindbare erste Welle 1 fest mit einem zweiten Element des ersten Planetenradsatzes RS1 verbunden. Schließlich ist ein Rotor 10 der elektrischen Maschine EM mit einem dritten Element des ersten Planetenradsatzes RS1 verbunden. Um die Doppelfunktion der Vorübersetzung zu erreichen, sodass diese auch für weitere Getriebeübersetzung einsetzbar ist, ist das dritte Element des ersten Planetenradsatzes RS1 über zumindest eines der Schaltelemente K3, K4 mit zumindest einem Element eines der übrigen beiden PlanetenradsätzeRS2, RS3 verbindbar.

Bei dem erfindungsgemäßen Radsatz ist vorgesehen, dass der Rotor 10 der elektrischen Maschine EM und das dritte Element des ersten Planetenradsatzes RS1 z.B. fest mit der dritten Welle 3 verbunden sind, wobei der Rotor 10 aus Anordnungsgründen der elektrischen Maschine EM auch über weitere Elemente anbindbar ist. Auf diese Weise bildet der erste Planetenradsatz RS1 eine getriebeinterne Vorübersetzung für die elektrische Maschine EM, wobei die dritte Welle 3 eine konstante Vorübersetzung auf die erste Welle 1 übersetzt.

Vorzugsweise ist die dritte Welle 3 über das als Kupplung ausgebildete vierte Schaltelement K3 und über die vierte Welle 4 mit einem dritten Element des zweiten Planetenradsatzes RS2 und mit einem ersten Element des dritten Planetenradsatzes RS3 verbindbar. Ferner ist die dritte Welle 3 über das als Kupplung ausgeführte fünfte Schaltelement K4 und über die sechste Welle 6 mit einem ersten Element des zweiten Planetenradsatzes RS2 verbindbar.

Im Weiteren sind das erste Element des dritten Planetenradsatzes RS3 und das dritte Element des zweiten Planetenradsatzes RS2 fest mit der vierten Welle 4 verbunden und das erste Element des zweiten Planetenradsatzes RS2 ist fest mit der sechsten Welle 6 verbunden. Zudem sind ein drittes Element des dritten Planetenradsatzes RS3 und ein zweites Element des zweiten Planetenradsatzes RS2 fest mit der fünften Welle 5 verbunden und ein zweites Element des dritten Planetenradsatzes RS3 und der Abtrieb Ab sind fest mit der zweiten Welle 2 verbunden, wobei generell fest verbunden bedeutet, dass keine schaltbare Verbindung vorgesehen ist.

Hinsichtlich der an den Gangübersetzungen beteiligten Schaltelemente ist vorgesehen, dass das zweite Schaltelement K1 als Kupplung ausgeführt ist und die erste Welle 1 mit der fünften Welle 5 im geschlossenen bzw. geschalteten Zustand verbindet. Das dritte Schaltelement K2 ist als Kupplung ausgeführt und verbindet im geschlossenen Zustand die erste Welle 1 mit der sechsten Welle 6. Das vierte Schaltelement K3 ist als Kupplung ausgeführt und verbindet im geschlossenen Zustand die dritte Welle 3 mit der vierten Welle 4. Das fünfte Schaltelement K4 ist als Kupplung ausgeführt und verbindet im geschlossenen Zustand die dritte Welle 3 mit der sechsten Welle 6. Schließlich ist das sechste Schaltelement B1 als Bremse ausgeführt und verbindet im geschlossenen Zustand die vierte Welle 4 mit dem Gehäuse 9.

Zusammenfassend ergibt sich bei sämtlichen Ausführungen eine besonders kompakte Bauweise aufgrund der integrierten Vorübersetzung der elektrischen Maschine EM, die auch an weiteren Übersetzungen beteiligt ist. Die vorgeschlagenen Verbindungen zwischen den einzelnen Radsätzen RS1, RS2, RS3 ergeben geringe Bauteilbelastungen sowie geringere Getriebeverluste aufgrund guter Verzahnungswirkungsgrade. Ferner wird eine optimierte Übersetzungsreihe bei den vorgesehenen Gangübersetzungen realisiert.

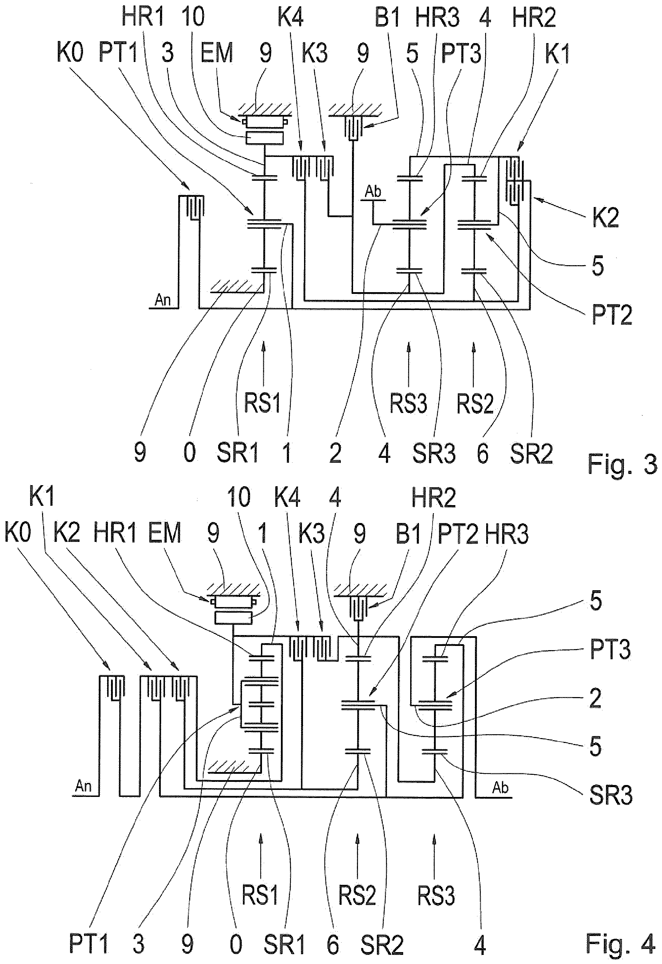

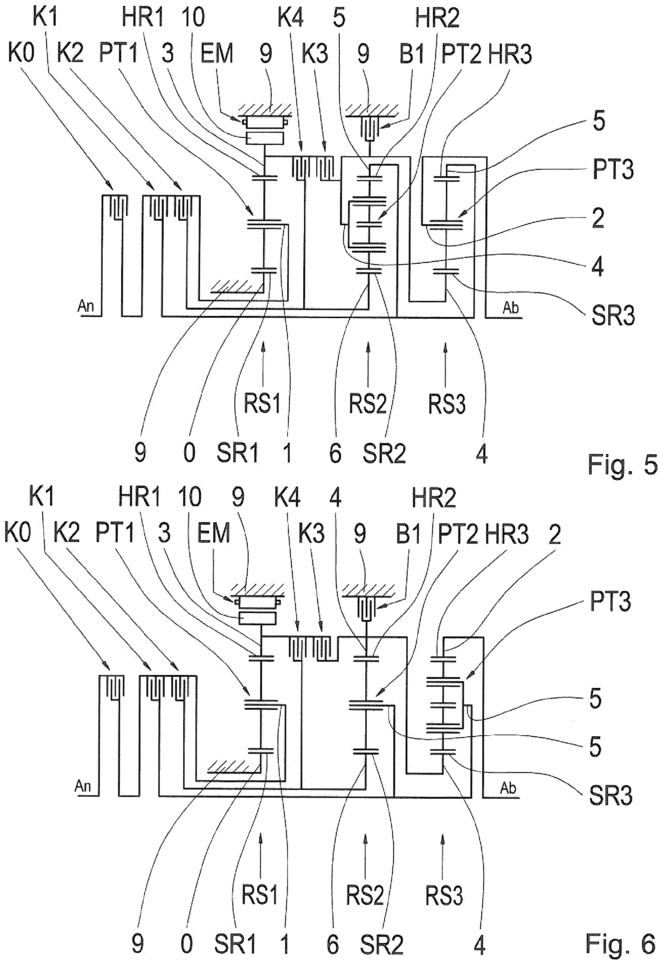

In den Figuren 1 bis 3 sind verschiedene schematische Ansichten des erfindungsgemäßen Radsatzes dargestellt, bei denen die drei Planetenradsätze RS1, RS2, RS3 jeweils als Minus-Planetenradsatz ausgeführt sind. Figur 4 zeigt eine Alternative der ersten Ausführungsvarianten gemäß Figur 1, bei der das Mehrstufengetriebe als ersten Planetenradsatz RS1 einen Plus-Planetenradsatz aufweist. Figur 5 zeigt eine Alternative, bei der der zweite Planetenradsatz RS2 als Plus-Planetenradsatz ausgeführt ist. Schließlich zeigt Figur 6 eine Ausführung, bei der der dritte Planetenradsatz RS3 als Plus-Planetenradsatz ausgeführt ist.

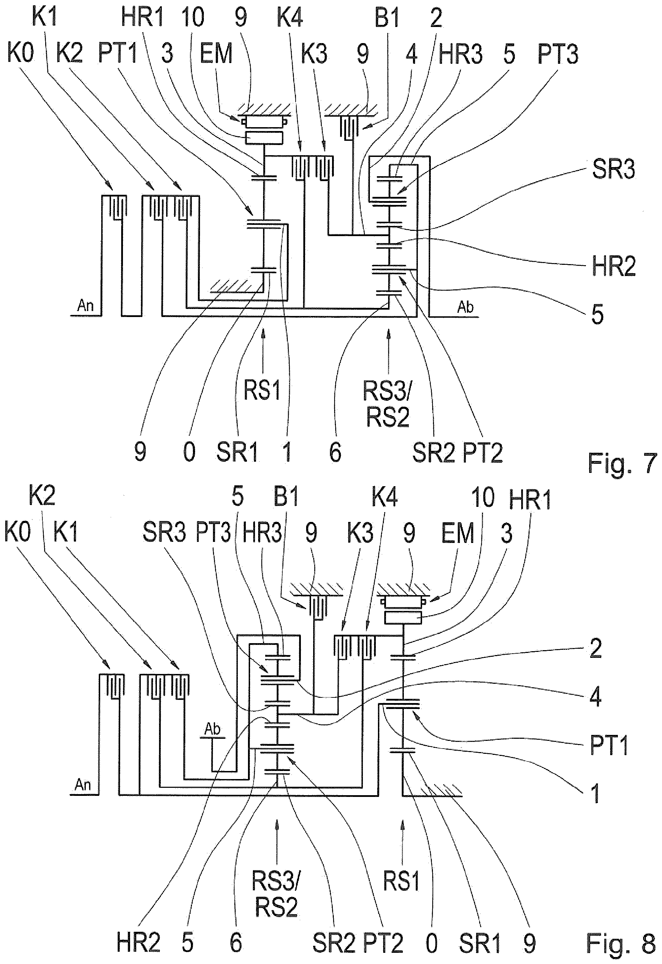

Fig. 7 zeigt bei einer koaxialen Anordnung von Antrieb An und Abtrieb Ab gemäß der ersten Ausführungsvariante eine verschachtelte Anordnung von zweiten und dritten Planetenradsatz RS2 und RS3. Hierbei sind die Elemente des zweiten Planetenradsatzes RS2 und des dritten Planetenradsatzes RS3 im Wesentlichen in einer gemeinsamen Radebene angeordnet, wobei der dritte Planetenradsatz RS3 radial außerhalb des zweiten Planetenradsatzes RS2 angeordnet ist. Bei dieser Art der Anordnung ergibt sich der Vorteil, dass das erste Element des dritten Planetenradsatzes RS3 und das dritte Element des zweiten Planetenradsatzes RS2 einer gemeinsamen Welle zugeordnet sind.

Bei der in Fig. 7 dargestellten Ausführung bildet der erste Planetenradsatz RS1 die erste Radebene und der zweite Planetenradsatz RS2 und der dritte Planetenradsatz RS3 bilden eine zweite Radebene, die axial hinter der ersten Radebene liegt.

In Fig. 8 ist ebenfalls eine verschachtelte Anordnung des zweiten Planetenradsatzes RS2 und des dritten Planetenradsatzes RS3 bei seitlich angeordneten Abtrieb Ab gemäß der zweiten Ausführungsvariante beispielhaft dargestellt. Hierbei bilden die miteinander verschachtelten Planetenradsätze RS2 und RS3 die erste Radebene, wobei axial dahinterliegend die zweite Radebene durch den ersten Planetenradsatz RS1 gebildet wird, dem auch die elektrische Maschine EM zugeordnet ist. Somit liegt auch die elektrische Maschine EM axial gesehen hinter der ersten Radebene.

Fig. 9 zeigt eine weitere verschachtelte Anordnung des zweiten Planetenradsatzes RS2 und des dritten Planetenradsatzes RS3. Im Unterschied zu der in Figur 8 dargestellten Ausführung bildet der erste Planetenradsatz RS1 die erste Radebene und der zweite Planetenradsatz RS2 mit dem dritten Planetenradsatz RS3 die axial dahinterliegende zweite Radebene.

Bei einem Minus-Planetenradsatz gilt, dass das erste Element als Sonnenrad SR1, SR2, SR3, das zweite Element als Planetenradträger bzw. Steg PT1, PT2, PT3 und das dritte Element als Hohlrad HR1, HR2, HR3 ausgeführt sind. Bei einem Plus-Planetenradsatz gilt, dass das erste Element als Sonnenrad SR1, SR2, SR3, das zweite Element als Hohlrad HR1, HR2, HR3 und das dritte Element als Planetenträger bzw. Steg PT1, PT2, PT3 ausgeführt sind.

Im Unterschied zu der ersten Ausführungsvarianten gemäß Figur 1 und 2 ergibt sich bei der zweiten Ausführungsvariante gemäß Figur 3 der Unterschied, dass die Reihenfolge der Planetenradsätze RS1, RS2, RS3 vertauscht ist. Bei der zweiten Ausführungsvariante ist ausgehend von der Antriebseite der erste Planetenradsatz RS1 als erste Radebene, der dritte Planetenradsatz RS3 als zweite Radebene und der zweite Planetenradsatz RS2 als dritte Radebene axial hintereinander angeordnet. Auf diese Weise wird ein seitlicher Abtrieb Ab realisiert, mit dem das erfindungsgemäße Mehrstufengetriebe eine Front-Quer- oder eine Heck-Queranordnung in dem Fahrzeug ermöglicht.

Wenn die Planetenradsätze RS1, RS2, RS3 jeweils als Minus-Planetenradsätze ausgeführt sind, sind die Wellen 1, 2, 3, 4, 5, 6 bei dem erfindungsgemäßen Mehrstufengetriebe wie folgt mit den Radsätzen RS1, RS2, RS3 verbunden.

Der Antrieb An ist über das erste Schaltelement K0 mit der ersten Welle 1 verbindbar. Die erste Welle 1 ist fest mit dem Planetenradträger PT1 des ersten Planetenradsatzes RS1 verbunden. Das Sonnenrad SR1 des ersten Planetenradsatzes RS1 ist mit dem Gehäuse 9 verbunden. Der Rotor 10 der elektrischen Maschine EM ist mit dem Hohlrad HR1 des ersten Planetenradsatzes RS1 verbunden. Der Rotor 10 der elektrischen Maschine EM und das Hohlrad HR1 des ersten Planetenradsatzes RS1 sind fest mit der dritten Welle 3 verbunden, wobei die dritte Welle 3 über das als Kupplung ausgebildete vierte Schaltelement K3 und über die vierte Welle 4 mit dem Hohlrad HR2 des zweiten Planetenradsatzes RS2 und mit dem Sonnenrad SR3 des dritten Planetenradsatzes RS3 verbindbar ist. Die dritte Welle 3 ist ferner über das als Kupplung ausgeführte fünfte Schaltelement K4 und über die sechste Welle 6 mit dem Sonnenrad SR2 des zweiten Planetenradsatzes RS2 verbindbar. Ferner ist das Sonnenrad SR3 des dritten Planetenradsatzes RS3 und das Hohlrad HR2 des zweiten Planetenradsatzes RS2 fest mit der vierten Welle 4 verbunden. Das Sonnenrad SR 2 des zweiten Planetenradsatzes RS2 ist fest mit der sechsten Welle 6 verbunden, wobei das Hohlrad HR3 des dritten Planetenradsatzes RS3 und der Planetenradträger PT2 des zweiten Planetenradsatzes RS2 fest mit der fünften Welle 5 verbunden sind. Der Planetenradträger PT3 des dritten Planetenradsatzes RS3 und der Abtrieb Ab sind fest mit der zweiten Welle 2 verbunden.

Bei den verschachtelten Anordnungen gemäß Figuren 7 bis 9 ergeben sich zwischen dem zweiten Planetenradsatz RS2 und dem dritten Planetenradsatz RS3 die Verbindung zwischen dem Hohlrad HR2 des zweiten Planetenradsatzes RS2 und dem Sonnenrad SR3 des dritten Planetenradsatzes RS3, wenn diese als Minus-Planetenradsatz ausgeführt sind. Hierbei ergibt sich ein gemeinsames Bauteil HR2/SR3, bei dem einerseits eine Innenverzahnung für das Hohlrad HR2 und eine Außenverzahnung für das Sonnenrad SR3 vorgesehen ist, wobei das gemeinsame Bauteile HR2/SR3 mit der Welle 4 verbunden ist.

Wenn einer oder mehrere der Planetenradsätze RS1, RS2, RS3 als Plus-Planetenradsatz ausgeführt sind, gelten die vorgenannten Verbindung ebenfalls, wobei als zweites Element des als Plus-Planetenradträger ausgeführten Planetenradsatzes nicht der Planetenradträger PT1, PT2, PT3 sondern das Hohlrad HR1, HR2, HR3 und als drittes Element nicht das Hohlrad HR1, HR2, HR3 sondern der Planetenradträger PT1, PT2, PT3 vorgesehen sind.

Aus dem in Figur 10 dargestellten Schaltschema ergeben sich folgende Gangübersetzungen. Zum Realisieren des ersten Vorwärtsganges G1 sind das als Bremse ausgeführte sechste Schaltelement B1 und das als Kupplung ausgeführte dritte Schaltelement K2 geschlossen, wobei zum Schalten des zweiten Vorwärtsganges G2 das als Bremse ausgeführte sechste Schaltelement B1 und das als Kupplung ausgeführte fünfte Schaltelement K4 geschlossen sind. Zum Schalten des dritten Vorwärtsganges G3 sind das als Bremse ausgeführte sechste Schaltelement B1 und das als Kupplung ausgeführte zweite Schaltelement K1 geschlossen, wobei zum Schalten des vierten Vorwärtsganges G4 das als Kupplung ausgeführte zweite Schaltelement K1 und das als Kupplung ausgeführte fünfte Schaltelement K4 geschlossen sind. Zum Schalten des fünften Vorwärtsganges G5 sind das als Kupplung ausgeführte zweite Schaltelement K1 und das als Kupplung ausgeführte dritte Schaltelement K2 geschlossen, wobei zum Schalten des sechsten Vorwärtsganges G6 das als Kupplung ausgeführte zweite Schaltelement K1 und das als Kupplung ausgeführte vierte Schaltelement K3 geschlossen sind. Zum Schalten des siebenten Vorwärtsganges G7 sind das als Kupplung ausgeführte dritte Schaltelement K2 und das als Kupplung ausgeführte vierte Schaltelement K3 geschlossen, wobei zum Schalten des achten Vorwärtsganges G8 das als Kupplung ausgeführte vierte Schaltelement K3 und das als Kupplung ausgeführte fünfte Schaltelement K4 geschlossen sind. Der Rückwartgang R wird elektrisch über eine der Vorwärtsgangübersetzungen realisiert.

### Bezugszeichen

- 0: feste Gehäusekoppelung
- 1: Erste Welle
- 2: Zweite Welle
- 3: Dritte Welle
- 4: Vierte Welle
- 5: Fünfte Welle
- 6: Sechste Welle
- 9: Gehäuse
- 10: Rotor
- EM: Elektrische Maschine
- RS1: Erster Planetenradsatz
- RS2: Zweiter Planetenradsatz
- RS3: Dritter Planetenradsatz
- HR1: Hohlrad des ersten Planetenradsatzes
- PT1: Planetenradträger des ersten Planetenradsatzes
- SR1: Sonnenrad des ersten Planetenradsatzes
- HR2: Hohlrad des zweiten Planetenradsatzes
- PT2: Planetenradträger des zweiten Planetenradsatzes
- SR2: Sonnenrad des zweiten Planetenradsatzes
- HR3: Hohlrad des dritten Planetenradsatzes
- PT3: Planetenradträger des dritten Planetenradsatzes
- SR3: Sonnenrad des dritten Planetenradsatzes
- HR2/SR3: gemeinsames Bauteil als Hohlrad und Sonnenrad
- G1: erster Vorwärtsgang
- G2: zweiter Vorwärtsgang
- G3: dritter Vorwärtsgang
- G4: vierter Vorwärtsgang
- G5: fünfter Vorwärtsgang
- G6: sechster Vorwärtsgang
- G7: siebenter Vorwärtsgang
- G8: achter Vorwärtsgang
- R: Elektrisch realisierter Rückwärtsgang
- An: Antrieb
- Ab: Abtrieb
- K0: erstes Schaltelement als Kupplung
- K1: zweites Schaltelement als Kupplung
- K2: drittes Schaltelement als Kupplung
- K3: viertes Schaltelement als Kupplung
- K4: fünftes Schaltelement als Kupplung
- B1: sechstes Schaltelement als Bremse

## Patentansprüche

1. Mehrstufengetriebe in Planetenbauweise in einem Gehäuse (9) für ein Fahrzeug mit zumindest einer elektrischen Maschine (EM) und mit einem ersten, einem zweiten und einem dritten Planetenradsatz (RS1, RS2, RS3), wobei ein Antrieb (An) über zumindest ein erstes Schaltelement (K0) mit einer ersten Welle (1) verbindbar ist und ein Abtrieb (Ab) mit einer zweiten Welle (2) verbunden ist, wobei eine dritte, vierte, fünfte und sechste Welle (3, 4, 5, 6) und zumindest ein zweites, drittes, viertes, fünftes und sechstes Schaltelement (K1, K2, K3, K4, B1) vorgesehen sind, durch deren Betätigung zumindest acht Vorwärtsgänge (G1, G2, G3, G4, G5, G6, G7, G8) realisierbar sind, wobei ein erstes Element des ersten Planetenradsatzes (RS1) mit dem Gehäuse (9) verbunden ist, dass die erste Welle (1) fest mit einem zweiten Element des ersten Planetenradsatzes (RS1) verbunden ist, dass ein Rotor (10) der elektrischen Maschine (EM) mit einem dritten Element des ersten Planetenradsatzes (RS1) verbunden ist und dass das dritte Element des ersten Planetenradsatzes (RS1) über das vierte oder das fünfte Schaltelement (K3, K4) mit zumindest einem Element eines der übrigen Planetenradsätze (RS2, RS3) verbindbar ist,
**dadurch gekennzeichnet, dass** das erste Element des ersten Planetenradsatzes (RS1) ein Sonnenrad (SR1) ist, dass das zweite Element des ersten Planetenradsatzes (RS1) ein Planetenradträger (PT1) ist, wenn der erste Planetenradsatz (RS1) als Minus-Planetenradsatz ausgeführt ist, dass das zweite Element des ersten Planetenradsatzes (RS1) ein Hohlrad (PT1) ist, wenn der erste Planetenradsatz (RS1) als Plus-Planetenradsatz ausgeführt ist, dass das dritte Element des ersten Planetenradsatzes (RS1) ein Hohlrad (HR1) ist, wenn der erste Planetenradsatz (RS1) als Minus-Planetenradsatz ausgeführt ist, und dass das dritte Element des ersten Planetenradsatzes (RS1) ein Planetenradträger (PT1) ist, wenn der erste Planetenradsatz (RS1) als Plus-Planetenradsatz ausgeführt ist.

2. Mehrstufengetriebe nach Anspruch 1, **dadurch gekennzeichnet, dass** der Rotor (10) der elektrischen Maschine (EM) und das dritte Element des ersten Planetenradsatzes (RS1) fest mit der dritten Welle (3) verbunden sind, dass die dritte Welle (3) über das als Kupplung ausgebildete vierte Schaltelement (K3) und über die vierte Welle (4) mit einem dritten Element des zweiten Planetenradsatzes (RS2) und mit einem ersten Element des dritten Planetenradsatzes (RS3) verbindbar ist, und dass die dritte Welle (3) über das als Kupplung ausgeführte fünfte Schaltelement (K4) und über die sechste Welle (4) mit einem ersten Element des zweiten Planetenradsatzes (RS2) verbindbar ist.

3. Mehrstufengetriebe nach Anspruch 2, **dadurch gekennzeichnet, dass** das erste Element des dritten Planetenradsatzes (RS3) und das dritte Element des zweiten Planetenradsatzes (RS2) fest mit der vierten Welle (4) verbunden sind, dass das erste Element des zweiten Planetenradsatzes (RS2) fest mit der sechsten Welle (6) verbunden ist, dass ein drittes Element des dritten Planetenradsatzes (RS3) und ein zweites Element des zweiten Planetenradsatzes (RS2) fest mit der fünften Welle (5) verbunden sind, und dass ein zweites Element des dritten Planetenradsatzes (RS3) und der Abtrieb (Ab) fest mit der zweiten Welle (2) verbunden sind.

4. Mehrstufengetriebe nach Anspruch 3, **dadurch gekennzeichnet, dass** das zweite Schaltelement (K1) als Kupplung ausgeführt ist und die erste Welle (1) mit der fünften Welle (5) im geschlossenen Zustand verbindet, dass das dritte Schaltelement (K2) als Kupplung ausgeführt ist und die erste Welle (1) mit der sechsten Welle (6) im geschlossenen Zustand verbindet, dass das vierte Schaltelement (K3) als Kupplung ausgeführt ist und die dritte Welle (3) mit der vierten Welle (4) im geschlossenen Zustand verbindet, dass das fünfte Schaltelement (K4) als Kupplung ausgeführt ist und die dritte Welle (3) mit der sechsten Welle (6) im geschlossenen Zustand verbindet und, dass das sechste Schaltelement (B1) als Bremse ausgeführt ist und die vierte Welle (4) mit dem Gehäuse (9) im geschlossenen Zustand verbindet.

5. Mehrstufengetriebe nach Anspruch 4, **dadurch gekennzeichnet, dass** zum Realisieren des ersten Vorwärtsganges (G1) das sechste Schaltelement (B1) und das dritte Schaltelement (K2) geschlossen sind, dass zum Schalten des zweiten Vorwärtsganges (G2) das sechste Schaltelement (B1) und das fünfte Schaltelement (K4) geschlossen sind, dass zum Schalten des dritten Vorwärtsganges (G3) das sechste Schaltelement (B1) und das zweite Schaltelement (K1) geschlossen sind, dass zum Schalten des vierten Vorwärtsganges (G4) das zweite Schaltelement (K1) und das fünfte Schaltelement (K4) geschlossen sind, dass zum Schalten des fünften Vorwärtsganges (G5) das zweite Schaltelement (K1) und das dritte Schaltelement (K2) geschlossen sind, dass zum Schalten des sechsten Vorwärtsganges (G6) das zweite Schaltelement (K1) und das vierte Schaltelement (K3) geschlossen sind, dass zum Schalten des siebenten Vorwärtsganges (G7) das dritte Schaltelement (K2) und das vierte Schaltelement (K3) geschlossen sind und dass zum Schalten des achten Vorwärtsganges (G8) das vierte Schaltelement (K3) und das fünfte Schaltelement (K4) geschlossen sind.

6. Mehrstufengetriebe nach einem der vorangehenden Ansprüche, **dadurch gekennzeichnet, dass** das erste Schaltelement (K0) als Kupplung ausgeführt ist und im geschlossenen Zustand den Antrieb (An) zum verbrennungsmotorischen Fahren mit der ersten Welle (1) verbindet.

7. Mehrstufengetriebe nach einem der vorangehenden Ansprüche, **dadurch gekennzeichnet, dass** das erste Element eines der Planetenradsätze (RS1, RS2, RS3) ein Sonnenrad (SR1, SR2, SR3) ist, wenn der Planetenradsatz (RS1, RS2, RS3) als Minus-Planetenradsatz ausgeführt ist, dass das zweite Element eines der Planetenradsätze (RS1, RS2, RS3) ein Planetenradträger (PT1, PT2, PT3) ist, wenn der Planetenradsatz als Minus-Planetenradsatz ausgeführt ist und dass das dritte Element eines der Planetenradsätze (RS1, RS2, RS3) ein Hohlrad (HR1, HR2, HR3) ist, wenn der Planetenradsatz (RS1, RS2, RS3) als Minus-Planetenradsatz ausgeführt ist.

8. Mehrstufengetriebe nach einem der vorangehenden Ansprüche, **dadurch gekennzeichnet, dass** das erste Element eines der Planetenradsätze (RS1, RS2, RS3) ein Sonnenrad (SR1, SR2, SR3) ist, wenn der Planetenradsatz (RS1, RS2, RS3) als Plus-Planetenradsatz ausgeführt ist, dass das zweite Element eines der Planetenradsätze ein Hohlrad (HR1, HR2, HR3) ist, wenn der Planetenradsatz (RS1, RS2, RS3) als Plus-Planetenradsatz ausgeführt ist, und dass das dritte Element eines der Planetenradsätze (RS1, RS2, RS3) ein Planetenradträger (PT1, PT2, PT3) ist, wenn der Planetenradsatz (RS1, RS2, RS3) als Plus-Planetenradsatz ausgeführt ist.

9. Mehrstufengetriebe nach einem der vorangehenden Ansprüche, **dadurch gekennzeichnet, dass** die Planetenradsätze (RS1, RS2, RS3) axial hintereinander angeordnet sind und drei Radebenen bilden.

10. Mehrstufengetriebe nach einem der Ansprüche 1 bis 8, **dadurch gekennzeichnet, dass** der zweite Planetenradsatz (RS2) und der dritte Planetenradsatz (RS3) radial hintereinander angeordnet sind, so dass der zweite Planetenradsatz (RS2) und der dritte Planetenradsatz (RS3) im Wesentlichen eine gemeinsame Radebene bilden.

## Claims

1. Multiple-stage transmission of planetary design in a housing (9) for a vehicle with at least one electric machine (EM) and with a first, a second and a third planetary gear set (RS1, RS2, RS3), it being possible for a drive (An) to be connected via at least one first shifting element (K0) to a first shaft (1), and an output (Ab) being connected to a second shaft (2), a third, fourth, fifth and sixth shaft (3, 4, 5, 6) and at least one second, third, fourth, fifth and sixth shifting element (K1, K2, K3, K4, B1) being provided, by way of the actuation of which at least eight forward gears (G1, G2, G3, G4, G5, G6, G7, G8) can be realized, a first element of the first planetary gear set (RS1) being connected to the housing (9), the first shaft (1) being connected fixedly to a second element of the first planetary gear set (RS1), a rotor (10) of the electric machine (EM) being connected to a third element of the first planetary gear set (RS1), and it being possible for the third element of the first planetary gear set (RS1) to be connected via the fourth or the fifth shifting element (K3, K4) to at least one element of one of the remaining planetary gear sets (RS2, RS3), **characterized in that** the first element of the first planetary gear set (RS1) is a sun gear (SR1), **in that** the second element of the first planetary gear set (RS1) is a planetary gear carrier (PT1) when the first planetary gear set (RS1) is configured as a negative planetary gear set, **in that** the second element of the first planetary gear set (RS1) is an internal gear (PT1) when the first planetary gear set (RS1) is configured as a positive planetary gear set, **in that** the third element of the first planetary gear set (RS1) is an internal gear (HR1) when the first planetary gear set (RS1) is configured as a negative planetary gear set, and **in that** the third element of the first planetary gear set (RS1) is a planetary gear carrier (PT1) when the first planetary gear set (RS1) is configured as a positive planetary gear set.

2. Multiple-stage transmission according to Claim 1, **characterized in that** the rotor (10) of the electric machine (EM) and the third element of the first planetary gear set (RS1) are connected fixedly to the third shaft (3), **in that** the third shaft (3) can be connected via the fourth shifting element (K3) which is configured as a clutch and via the fourth shaft (4) to a third element of the second planetary gear set (RS2) and to a first element of the third planetary gear set (RS3), and **in that** the third shaft (3) can be connected via the fifth shifting element (K4) which is configured as a clutch and via the sixth shaft (4) to a first element of the second planetary gear set (RS2).

3. Multiple-stage transmission according to Claim 2, **characterized in that** the first element of the third planetary gear set (RS3) and the third element of the second planetary gear set (RS2) are connected fixedly to the fourth shaft (4), **in that** the first element of the second planetary gear set (RS2) is connected fixedly to the sixth shaft (6), **in that** a third element of the third planetary gear set (RS3) and a second element of the second planetary gear set (RS2) are connected fixedly to the fifth shaft (5), and **in that** a second element of the third planetary gear set (RS3) and the output (Ab) are connected fixedly to the second shaft (2).

4. Multiple-stage transmission according to Claim 3, **characterized in that** the second shifting element (K1) is configured as a clutch and connects the first shaft (1) to the fifth shaft (5) in the closed state, **in that** the third shifting element (K2) is configured as a clutch and connects the first shaft (1) to the sixth shaft (6) in the closed state, **in that** the fourth shifting element (K3) is configured as a clutch and connects the third shaft (3) to the fourth shaft (4) in the closed state, **in that** the fifth shifting element (K4) is configured as a clutch and connects the third shaft (3) to the sixth shaft (6) in the closed state, and **in that** the sixth shifting element (B1) is configured as a brake and connects the fourth shaft (4) to the housing (9) in the closed state.

5. Multiple-stage transmission according to Claim 4, **characterized in that** the sixth shifting element (B1) and the third shifting element (K2) are closed in order to realize the first forward gear (G1), **in that** the sixth shifting element (B1) and the fifth shifting element (K4) are closed in order to select the second forward gear (G2), **in that** the sixth shifting element (B1) and the second shifting element (K1) are closed in order to select the third forward gear (G3), **in that** the second shifting element (K1) and the fifth shifting element (K4) are closed in order to select the fourth forward gear (G4), **in that** the second shifting element (K1) and the third shifting element (K2) are closed in order to select the fifth forward gear (G5), **in that** the second shifting element (K1) and the fourth shifting element (K3) are closed in order to select the sixth forward gear (G6), **in that** the third shifting element (K2) and the fourth shifting element (K3) are closed in order to select the seventh forward gear (G7), and **in that** the fourth shifting element (K3) and the fifth shifting element (K4) are closed in order to select the eighth forward gear (G8) .

6. Multiple-stage transmission according to one of the preceding claims, **characterized in that** the first shifting element (K0) is configured as a clutch and, in the closed state, connects the drive (An) to the first shaft (1) for driving by internal combustion engine.

7. Multiple-stage transmission according to one of the preceding claims, **characterized in that** the first element of one of the planetary gear sets (RS1, RS2, RS3) is a sun gear (SR1, SR2, SR3) when the planetary gear set (RS1, RS2, RS3) is configured as a negative planetary gear set, **in that** the second element of one of the planetary gear sets (RS1, RS2, RS3) is a planetary gear carrier (PT1, PT2, PT3) when the planetary gear set is configured as a negative planetary gear set, and **in that** the third element of one of the planetary gear sets (RS1, RS2, RS3) is an internal gear (HR1, HR2, HR3) when the planetary gear set (RS1, RS2, RS3) is configured as a negative planetary gear set.

8. Multiple-stage transmission according to one of the preceding claims, **characterized in that** the first element of one of the planetary gear sets (RS1, RS2, RS3) is a sun gear (SR1, SR2, SR3) when the planetary gear set (RS1, RS2, RS3) is configured as a positive planetary gear set, **in that** the second element of one of the planetary gear sets is an internal gear (HR1, HR2, HR3) when the planetary gear set (RS1, RS2, RS3) is configured as a positive planetary gear set, and **in that** the third element of one of the planetary gear sets (RS1, RS2, RS3) is a planetary gear carrier (PT1, PT2, PT3) when the planetary gear set (RS1, RS2, RS3) is configured as a positive planetary gear set.

9. Multiple-stage transmission according to one of the preceding claims, **characterized in that** the planetary gear sets (RS1, RS2, RS3) are arranged axially behind one another and form three gear planes.

10. Multiple-step transmission according to one of Claims 1 to 8, **characterized in that** the second planetary gear set (RS2) and the third planetary gear set (RS3) are arranged radially behind one another, with the result that the second planetary gear set (RS2) and the third planetary gear set (RS3) forms substantially a common gear plane.

## Revendications

1. Boîte de vitesses multiétagée de construction planétaire dans un boîtier (9) pour un véhicule comportant au moins un moteur électrique (EM) et comportant un premier, un deuxième et un troisième train planétaire (RS1, RS2, RS3), un entraînement (An) pouvant être relié à un premier arbre (1) par le biais d'au moins un premier élément de changement de vitesses (K0) et une sortie (Ab) étant reliée à un deuxième arbre (2), un troisième, un quatrième, un cinquième et un sixième arbre (3, 4, 5, 6) et au moins un deuxième, un troisième, un quatrième, un cinquième et un sixième élément de changement de vitesses (K1, K2, K3, K4, B1) étant prévus, par l'actionnement desquels au moins huit rapports de marche avant (G1, G2, G3, G4, G5, G6, G7, G8) peuvent être réalisés, un premier élément du premier train planétaire (RS1) étant relié au boîtier (9), le premier arbre (1) étant relié fixement à un deuxième élément du premier train planétaire (RS1), un rotor (10) du moteur électrique (EM) étant relié à un troisième élément du premier train planétaire (RS1) et le troisième élément du premier train planétaire (RS1) pouvant être relié à au moins un élément de l'un des trains planétaires restants (RS2, RS3) par le biais du quatrième ou du cinquième élément de changement de vitesses (K3, K4), **caractérisée en ce que** le premier élément du premier train planétaire (RS1) est un pignon planétaire (SR1), **en ce que** le deuxième élément du premier train planétaire (RS1) est un porte-satellites (PT1) lorsque le premier train planétaire (RS1) est réalisé comme train planétaire négatif, **en ce que** le deuxième élément du premier train planétaire (RS1) est une couronne (HR1) lorsque le premier train planétaire (RS1) est réalisé comme train planétaire positif, **en ce que** le troisième élément du premier train planétaire (RS1) est une couronne (HR1) lorsque le premier train planétaire (RS1) est réalisé comme train planétaire négatif, et **en ce que** le troisième élément du premier train planétaire (RS1) est un porte-satellites (PT1) lorsque le premier train planétaire (RS1) est réalisé comme train planétaire positif.

2. Boîte de vitesses multiétagée selon la revendication 1, **caractérisée en ce que** le rotor (10) du moteur électrique (EM) et le troisième élément du premier train planétaire (RS1) sont reliés fixement au troisième arbre (3), **en ce que** le troisième arbre (3) peut être relié à un troisième élément du deuxième train planétaire (RS2) et à un premier élément du troisième train planétaire (RS3) par le biais du quatrième élément de changement de vitesses (K3) réalisé comme embrayage et par le biais du quatrième arbre (4), et **en ce que** le troisième arbre (3) peut être relié à un premier élément du deuxième train planétaire (RS2) par le biais du cinquième élément de changement de vitesses (K4) réalisé comme embrayage et par le biais du sixième arbre (4).

3. Boîte de vitesses multiétagée selon la revendication 2, **caractérisée en ce que** le premier élément du troisième train planétaire (RS3) et le troisième élément du deuxième train planétaire (RS2) sont reliés fixement au quatrième arbre (4), **en ce que** le premier élément du deuxième train planétaire (RS2) est relié fixement au sixième arbre (6), **en ce qu'**un troisième élément du troisième train planétaire (RS3) et un deuxième élément du deuxième train planétaire (RS2) sont reliés fixement au cinquième arbre (5), et **en ce qu'**un deuxième élément du troisième train planétaire (RS3) et la sortie (Ab) sont reliés fixement au deuxième arbre (2).

4. Boîte de vitesses multiétagée selon la revendication 3, **caractérisée en ce que** le deuxième élément de changement de vitesses (K1) est réalisé comme embrayage et relie le premier arbre (1) au cinquième arbre (5) à l'état fermé, **en ce que** le troisième élément de changement de vitesses (K2) est réalisé comme embrayage et relie le premier arbre (1) au sixième arbre (6) à l'état fermé, **en ce que** le quatrième élément de changement de vitesses (K3) est réalisé comme embrayage et relie le troisième arbre (3) au quatrième arbre (4) à l'état fermé, **en ce que** le cinquième élément de changement de vitesses (K4) est réalisé comme embrayage et relie le troisième arbre (3) au sixième arbre (6) à l'état fermé, **en ce que** le sixième élément de changement de vitesses (B1) est réalisé comme frein et relie le quatrième arbre (4) au boîtier (9) à l'état fermé.

5. Boîte de vitesses multiétagée selon la revendication 4, **caractérisée en ce que**, pour la réalisation du premier rapport de marche avant (G1), le sixième élément de changement de vitesses (B1) et le troisième élément de changement de vitesses (K2) sont fermés, **en ce que**, pour le passage du deuxième rapport de marche avant (G2), le sixième élément de changement de vitesses (B1) et le cinquième élément de changement de vitesses (K4) sont fermés, **en ce que**, pour le passage du troisième rapport de marche avant (G3), le sixième élément de changement de vitesses (B1) et le deuxième élément de changement de vitesses (K1) sont fermés, **en ce que**, pour le passage du quatrième rapport de marche avant (G4), le deuxième élément de changement de vitesses (K1) et le cinquième élément de changement de vitesses (K4) sont fermés, **en ce que**, pour le passage du cinquième rapport de marche avant (G5), le deuxième élément de changement de vitesses (K1) et le troisième élément de changement de vitesses (K2) sont fermés, **en ce que**, pour le passage du sixième rapport de marche avant (G6), le deuxième élément de changement de vitesses (K1) et le quatrième élément de changement de vitesses (K3) sont fermés, **en ce que**, pour le passage du septième rapport de marche avant (G7), le troisième élément de changement de vitesses (K2) et le quatrième élément de changement de vitesses (K3) sont fermés, et **en ce que**, pour le passage du huitième rapport de marche avant (G8), le quatrième élément de changement de vitesses (K3) et le cinquième élément de changement de vitesses (K4) sont fermés.

6. Boîte de vitesses multiétagée selon l'une des revendications précédentes, **caractérisée en ce que** le premier élément de changement de vitesses (K0) est réalisé comme embrayage et, à l'état fermé, relie l'entraînement (An) au premier arbre (1) pour la conduite par moteur à combustion interne.

7. Boîte de vitesses multiétagée selon l'une des revendications précédentes, **caractérisée en ce que** le premier élément de l'un des trains planétaires (RS1, RS2, RS3) est un pignon planétaire (SR1, SR2, SR3) lorsque le train planétaire (RS1, RS2, RS3) est réalisé comme train planétaire négatif, **en ce que** le deuxième élément de l'un des trains planétaires (RS1, RS2, RS3) est un porte-satellites (PT1, PT2, PT3) lorsque le train planétaire est réalisé comme train planétaire négatif et **en ce que** le troisième élément de l'un des trains planétaires (RS1, RS2, RS3) est une couronne (HR1, HR2, HR3) lorsque le train planétaire (RS1, RS2, RS3) est réalisé comme train planétaire négatif.

8. Boîte de vitesses multiétagée selon l'une des revendications précédentes, **caractérisée en ce que** le premier élément de l'un des trains planétaires (RS1, RS2, RS3) est un pignon planétaire (SR1, SR2, SR3) lorsque le train planétaire (RS1, RS2, RS3) est réalisé comme train planétaire positif, **en ce que** le deuxième élément de l'un des trains planétaires (RS1, RS2, RS3) est une couronne (HR1, HR2, HR3) lorsque le train planétaire (RS1, RS2, RS3) est réalisé comme train planétaire positif et **en ce que** le troisième élément de l'un des trains planétaires (RS1, RS2, RS3) est un porte-satellites (PT1, PT2, PT3) lorsque le train planétaire (RS1, RS2, RS3) est réalisé comme train planétaire positif.

9. Boîte de vitesses multiétagée selon l'une des revendications précédentes, **caractérisée en ce que** les trains planétaires (RS1, RS2, RS3) sont disposés axialement les uns derrière les autres et forment trois plans de pignons.

10. Boîte de vitesses multiétagée selon l'une des revendications 1 à 8, **caractérisée en ce que** le deuxième train planétaire (RS2) et le troisième train planétaire (RS3) sont disposés radialement l'un derrière l'autre, de sorte que le deuxième train planétaire (RS2) et le troisième train planétaire (RS3) forment sensiblement un plan de pignons commun.
